# EUROPEAN PATENT APPLICATION

(11) **EP 4 491 697 A1**
(43) Date of publication of application: **15.01.2025**
(21) Application number: 23184907.6
(22) Date of filing: 12.07.2023
(51) Int. Cl.: C10G 31/06, B01D 35/18, C10G 33/06, C10M 175/00

(54) **A VENTILATED OIL RECLAMATION UNIT AND METHOD FOR VENTILATION**

(71) Applicant: Greenoil Standard APS, 8400 Ebeltoft (DK)
(72) Inventor: CHRISTENSEN, Lars Brejnbjerg, 8400 Ebeltoft (DK); DANIELSEN, Michael Kondrup, 8400 Ebeltoft (DK); KJÆRGAARD, Jan Klemmensen, 8400 Ebeltoft (DK)
(74) Representative: Patrade A/S

(57) **Abstract**

The present invention relates to an oil reclamation unit (100) for a liquid, said reclamation unit comprising: a housing (200), said housing comprising: a filter unit (250) an evaporator chamber (300), a heating source (400), such as a heating unit, an oil pump unit (500) for generating an oil flow, a ventilation system (600), said ventilation system comprising at least: an air inlet (610), and an air outlet (620).

Furthermore, the invention relates to a method for ventilation of an oil reclamation unit, wherein said method comprises the steps of: starting an oil reclamation unit (100) by starting an oil pump (500), ventilating the oil reclamation unit (100) by a ventilation system (600), preferably an integrated ventilation system, wherein the ventilation system (600) is driven at least partly, preferably fully, by the action of the motor (700).

## Description

### FIELD OF THE INVENTION

The present invention relates to an improved oil reclamation unit for a liquid comprising: a housing, said housing comprising: a housing filter unit, an evaporator chamber having at least a side wall, a heating source, such as a heating unit, an oil pump unit for generating an oil flow, and a ventilation system, said ventilation system comprising at least: an air inlet, and an air outlet.

Furthermore, the invention relates to a method for ventilation of an oil reclamation unit, wherein said method comprises the steps of:
providing an oil reclamation unit, starting the oil reclamation unit by starting an oil pump, providing a ventilating system of the oil reclamation unit (100), for ventilating the unit, preferably an integrated ventilation system, said ventilation system comprising at least: an air inlet, and an air outlet, sucking in air, preferably by a fan air inlet of a fan arrangement, providing an air stream, preferably at least partly through a tube and/or through a filter, ventilating the oil reclamation unit, preferably ventilating an evaporator chamber of the unit, by the air outlet, wherein the ventilation system is driven at least partly, preferably fully, by the action of the motor.

### BACKGROUND OF THE INVENTION

In most of the known oil reclamation units an evaporation chamber is provided so that when oil is heated the water is evaporated.

However, there is a number of disadvantages in the construction of these known units, systems and devices, since none of the known systems have an optimal evaporation effect made in an economically friendly system.

Hence, an improved oil reclamation unit, preferably an efficient and reliable unit, suitable for efficiently evaporating water from the oil, would be advantageous, and in particular a more resistant, economical and sustainable oil reclamation unit with longevity would be advantageous.

### OBJECT OF THE INVENTION

It is an object of the present invention to provide a reclamation unit which efficiently removes water from a liquid, by way of example oil, which has low energy consumption and reduced risk of damage due to superheating of the liquid.

In particular, it may be seen as an object of the present invention to provide a reclamation unit with an improved evaporation effect of the oil in the evaporation chamber.

It is further an object of the present invention to provide an alternative to the prior art.

This is obtained with a reclamation unit having a ventilated evaporation unit.

### DESCRIPTION OF THE INVENTION

Thus, the above described object and several other objects are intended to be obtained in a first aspect of the invention by providing an oil reclamation unit, said reclamation unit comprising:
- a housing, said housing comprising:
   - a filter unit,
- an evaporator chamber having at least a side wall,
- a heating source, such as a heating unit,
- a pump unit for generating an oil flow,
- a ventilation system, said ventilation system comprising at least:
   - an air inlet, and
   - an air outlet.

The invention is particularly, but not exclusively, advantageous for providing an oil reclamation unit, wherein the water evaporating, such as water separation from the oil, is improved by ventilating the evaporation chamber.

By ventilating the evaporation chamber, the humidity is lowered.

The ventilation of the evaporation chamber might cause an increase of the water evaporation with 2 times, 4 times, 6 times, 8 times or even more than 10 times than if the evaporation chamber was not ventilated.

In the context of the present invention, "unit" may be understood as a system, a device, and/or the like.

In the context of the present invention, "ventilation" may be understood as providing an air stream.

In the context of the present invention, "air" may be understood as air having all temperatures, such as air having a temperature beneath 100 degrees, and/or such as air having a temperature above 100 degrees, such as being steam.

In one embodiment of the invention the air inlet is provided with an air stream from a fan arrangement, when in use.

In one embodiment of the invention the ventilation system is arranged to provide ventilation of the evaporator chamber, when in use.

The embodiment is particularly, but not exclusively, advantageous for increasing and thereby improving the water evaporation from the oil in the evaporation chamber.

In one embodiment of the invention the air outlet is a steam outlet for exhausting steam, when in use.

The embodiment is particularly, but not exclusively, advantageous for using the overpressure / the positive pressure in the evaporation chamber to push out steam from the evaporation chamber through the outlet.

In one embodiment of the invention the system further comprises:
- a motor of the oil pump, such as a motor axel and/or a motor shaft.

In one embodiment of the invention the system further comprises:
- a fan arrangement, preferably in a fan housing.

The embodiment is particularly, but not exclusively, advantageous for providing a ventilation system comprising a fan arrangement, which is being a relatively simple arrangement though providing an extremely effective ventilation of an oil reclamation unit.

In one embodiment of the invention the fan arrangement comprises an impeller and/or a propeller, and/or a fan wheel and/or is provided by fan segments cut in the motor.

The embodiment is particularly, but not exclusively, advantageous for providing a fan arrangement suitable for being comprised in an oil reclamation unit and further for ventilation of an evaporation chamber in an oil reclamation unit.

Also, the fan arrangement is provided as a compact part of the ventilation system.

In one embodiment of the invention the ventilation system is driven at least partly, preferably fully, by the action of the motor.

The embodiment is particularly, but not exclusively, advantageous for providing a ventilation system being both cost-efficient but also environmentally friendly.

By using the actions from the already running motor, such as using the energy or the airing/venting of the running motor, there is no need of any additional energy supply. There is neither necessarily any need of an external energy supply. However, it should be understood that the invention can be performed with an external energy supply, if desired.

Preferably the ventilation system, or a part of the ventilation system, is being incorporated into the oil reclamation unit.

In one embodiment of the invention the fan arrangement and/or fan housing is an integrated part of a clutch housing.

The embodiment is particularly, but not exclusively, advantageous for saving space in the reclamation unit.

In one embodiment of the invention the fan arrangement is arranged in relation to and/or on the motor of the oil pump.

The embodiment is particularly, but not exclusively, advantageous for utilising the energy provided by the motor in the most optimal way. And further for utilising the space most optimal.

In one embodiment of the invention the fan arrangement is comprising:
- a fan inlet, and
- a fan outlet.

The embodiment is particularly, but not exclusively, advantageous for providing an arrangement wherein the surrounding air can be sucked in by the fan inlet and wherein air can be blown out by the fan outlet and therefrom conducted and continued, preferably conducted through tubes.

In one embodiment of the invention the oil reclamation unit comprises a tank.

The embodiment is particularly, but not exclusively, advantageous for being equipped with a tank, such as an accumulator tank, where there is no direct return to oil reservoir by gravity. This, along with the air flow through the evaporation chamber, is used for maintaining the evaporator chamber ventilated to the atmosphere.

The accumulator tank is of various size depending on the filter capacity, but in general has sufficient excess volume for holding the oil totally drained from filter elements on the system. Draining from the filter inserts happens when the unit is shut off, due to the fact that the filter is mounted with an oil exit downwards towards the evaporation chamber.

In one embodiment of the invention the fan outlet is in fluid communication with the air inlet.

The embodiment is particularly, but not exclusively, advantageous for providing a ventilation system wherein the air blown out from the fan outlet is conducted up to the air inlet of the reclamation unit. Preferably the fan outlet is connected to a tube, preferably via a fitting, said tube also being connected to the oil reclamation unit, such as a tank of the unit or such as the evaporation chamber.

In one embodiment of the invention an air stream between the fan and the air inlet is provided, when in use, preferably an air stream is conducted through at least one tube from the fan outlet to the air inlet.

Where a tank is comprised in the unit, it will naturally ensure ventilation by blowing air through the tube. To enhance water evaporation, the oil reclamation units can now be made with forced ventilation by blowing a fractional amount of ambient air through an air inlet located at the top of the tank.

It should be understood that in systems without a tank, it is also possible to blow air directly into the evaporation chamber.

In one embodiment of the invention an air stream is provided by one or more integrated air sources.

In one embodiment of the invention the unit comprises:
- a ventilation filter, preferably an in-line filter.

The embodiment is particularly, but not exclusively, advantageous for ensuring that the ventilation system does not contaminate the filtered oil. By providing a ventilation filter, the potential contamination in the air is removed before the ventilation air is reaching the oil in the evaporation chamber.

In one embodiment of the invention the ventilation filter is connected to the tube or in relation to the tube conducting an air stream.

The embodiment is particularly, but not exclusively, advantageous for making the most optimal filtering of potential contamination.

In one embodiment of the invention the ventilation filter is mounted at reclamation united by at least one bracket, preferably two or more bracket.

The embodiment is particularly, but not exclusively, advantageous for providing an easy mounting/attachment of the filter. The filter can easily be attached and/or detached from the brackets, such as when service or change of the filter is needed.

In the following the reclamation unit is described as one very specific embodiment and as an oil reclamation unit, but it should be noted that the reclamation unit may be used with other liquids where it is necessary to remove solid contaminants and water.

The reclamation unit comprising a housing with a detachable upper and lower part where said lower part is connected with a base part, which comprises at least one heating unit and a number of inlets and outlets where said upper part encloses a filter unit, and where said lower part and said base part form an evaporation chamber. Thus, the reclamation unit is of the type where the filter unit is arranged on top of the evaporation chamber which is advantageous because, due to gravity, the oil will automatically flow downwards, and only small amounts of oil will be left in the filter unit when the reclamation unit is not used or disposed of.

As the heating unit is protruding into said evaporator chamber with no conductive contact to said side walls, and the separator plate forces the oil outwards onto the side wall of the evaporator chamber, the heating unit will never be in contact with the oil film on the side wall. Hence the heating of the oil will be caused by convective heat transfer to the atmosphere enclosed in the evaporation chamber, allowing only the surface of the oil film to be heated, and therefore the evaporation process in the reclamation unit uses a very small amount of heat because it is not necessary to heat the evaporation chamber walls in order to prohibit condensation of formed steam. Heating of the evaporation chamber walls causes a large amount of heat loss to the surroundings and furthermore heats the oil in this process.

The evaporation process in the reclamation unit utilises a central heating unit that by convection heats the evaporation chamber atmosphere. The surface temperature and surface area of the heating unit can be adjusted so as to reduce the amount of radiated heat energy which will contribute to heat loss by heating the flowing oil in the evaporation chamber. Only the convective heat transfer from the hot atmosphere in the evaporation chamber to the surface of flowing oil film on the evaporation chamber wall causes evaporation of water from the oil.

Furthermore, when the heating unit is not in contact with the side wall of the evaporation chamber, due to the conductive effect the surroundings will retain the side wall of the evaporation chamber at a temperature lower than the temperature of the evaporation chamber atmosphere. Thus, there is not a high energy loss from the reclamation unit to the surroundings, and furthermore the risk of superheating the oil is reduced significantly.

In a second aspect, the invention further relates to a method for ventilation of an oil reclamation unit, preferably an oil reclamation unit according to any of the preceding claims, wherein said method comprises the steps of:
- providing an oil reclamation unit,
- starting the oil reclamation unit by starting an oil pump,
- providing a ventilating system of the oil reclamation unit, for ventilating the unit, preferably an integrated ventilation system, said ventilation system comprising at least:
   - an air inlet, and
   - an air outlet,
- sucking in air, preferably by a fan air inlet of a fan arrangement,
- providing an air stream, preferably at least partly through a tube and/or through a filter,
- ventilating the oil reclamation unit, preferably ventilating an evaporator chamber of the unit, by the air outlet,

wherein the ventilation system is driven at least partly, preferably fully, by the action of the motor,
wherein the steps of the method can be executed in any order and/or executed simultaneously.

The second aspect of the invention is particularly, but not exclusively, advantageous for providing a method for optimizing the water evaporation in an oil reclamation unit, wherein the water evaporating, such as water separation from the oil, is improved by ventilating the evaporation chamber. The method of ventilation of an evaporation chamber might cause an increase of the water evaporation with 2 times, 4 times, 6 times, 8 times or even more than 10 times than if the evaporation chamber was not ventilated.

The first and second aspect of the present invention may each be combined with any of the other aspects. These and other aspects of the invention will be apparent from and elucidated with reference to the embodiments described hereinafter.

Embodiments from the system should be seen as applicable to the method, and embodiments from the method should be seen as applicable for the product/system.

### DESCRIPTION OF THE DRAWING

Various examples are described hereinafter with reference to the figures. Like reference numerals refer to like elements throughout. Like elements will, thus, not be described in detail with respect to the description of each figure. It should also be noted that the figures are only intended to facilitate the description of the examples. They are not intended as an exhaustive description of the claimed invention or as a limitation on the scope of the claimed invention. In addition, an illustrated example need not have all the aspects or advantages shown. An aspect or an advantage described in conjunction with a particular example is not necessarily limited to that example and can be practiced in any other examples even if not so illustrated, or if not so explicitly described.

Exemplary embodiments of the invention are described in the figures, whereon:
Figure 1a illustrates a reclamation unit according to the invention.
Figure 1b illustrates an exploded view of a reclamation unit.
Figure 2 illustrates a 3D drawing of a motor and fan arrangement.
Figure 3 illustrates a reclamation unit with two motors and a ventilation system.
Figure 4 illustrates a cross-section into an evaporation chamber.
Figure 5 illustrates an embodiment of a ventilation filter.

### DETAILED DESCRIPTION OF THE INVENTION

Exemplary examples will now be described more fully hereinafter with reference to the accompanying drawings. In this regard, the present examples may have different forms and should not be construed as being limited to the descriptions set forth herein. Accordingly, the examples are merely described below, by referring to the figures, to explain aspects.

Throughout the specification, when an element is referred to as being "connected" to another element, the element is "directly connected" to the other element, "electrically connected", "fluidic connected" or "communicatively connected" to the other element with one or more intervening elements interposed there between.

The terminology used herein is for the purpose of describing particular examples only and is not intended to be limiting. As used herein, the terms "comprises" "comprising" "includes" and/or "including" when used in this specification specify the presence of stated features, integers, steps, operations, elements, and/or components, but do not preclude the presence or addition of one or more other features, integers, steps, operations, elements, components, and/or groups thereof.

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

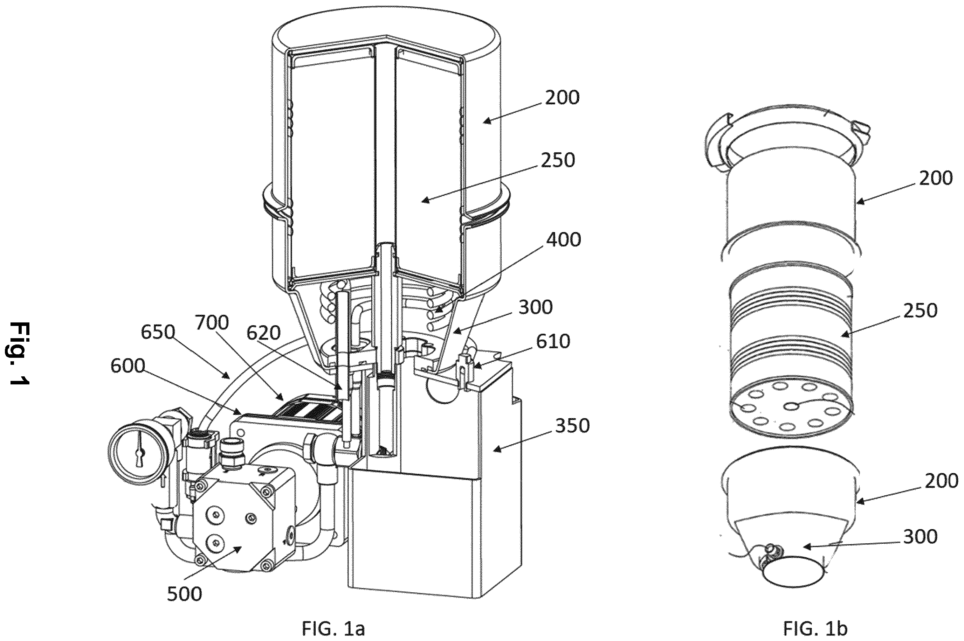

FIG 1a illustrates a reclamation unit 100 according to the invention, wherein the reclamation unit comprises:
- a housing 200, said housing comprising:
   - a filter unit 250,
- an evaporator chamber 300,
- a heating source 400, such as a heating unit, in FIG. 1a the heating unit is a coil,
- an oil pump unit 500 for generating an oil flow,
- a ventilation system 600, said ventilation system comprising at least:
   - an air inlet 610, and
   - an air outlet 620, the air outlet 620 may be a steam outlet for exhausting steam,
      wherein the ventilation system 600 is arranged to provide ventilation of the evaporator chamber 300, when in use,
- a motor 700 of the oil pump 500, such as a motor axel and/or a motor shaft, wherein an air stream 900 is provided by one or more integrated air sources, such as by the motor 700.

The illustrated oil reclamation unit is suitable for performing a method (not shown) for ventilation of an oil reclamation unit, wherein said method comprises the steps of:
- providing an oil reclamation unit 100,
- starting the oil reclamation unit 100 by starting an oil pump 500,
- providing a ventilating system of the oil reclamation unit 100, for ventilating the unit, preferably an integrated ventilation system, said ventilation system comprising at least:
   - an air inlet 610, and
   - an air outlet 620,
- sucking in air, preferably by a fan air inlet 810 of a fan arrangement 800,
- providing an air stream 900, preferably at least partly through a tube 650 and/or through a filter 680,
- ventilating the oil reclamation unit 100, preferably ventilating an evaporator chamber 300 of the unit, by the air outlet 620,

wherein the ventilation system 600 is driven at least partly, preferably fully, by the action of the motor 700,
wherein the steps of the method can be executed in any order and/or executed simultaneously.

FIG 1b illustrates an exploded view of a reclamation unit. It should be understood that the illustration is very simplified.

FIG. 1b illustrates the various parts of a reclamation unit 100, comprising an upper part and a lower part of a housing 200, which is connectable in an airtight manner. Inside the housing 200 is enclosed a filter unit 250. The lower part of the housing 200 comprises an evaporator chamber 300.

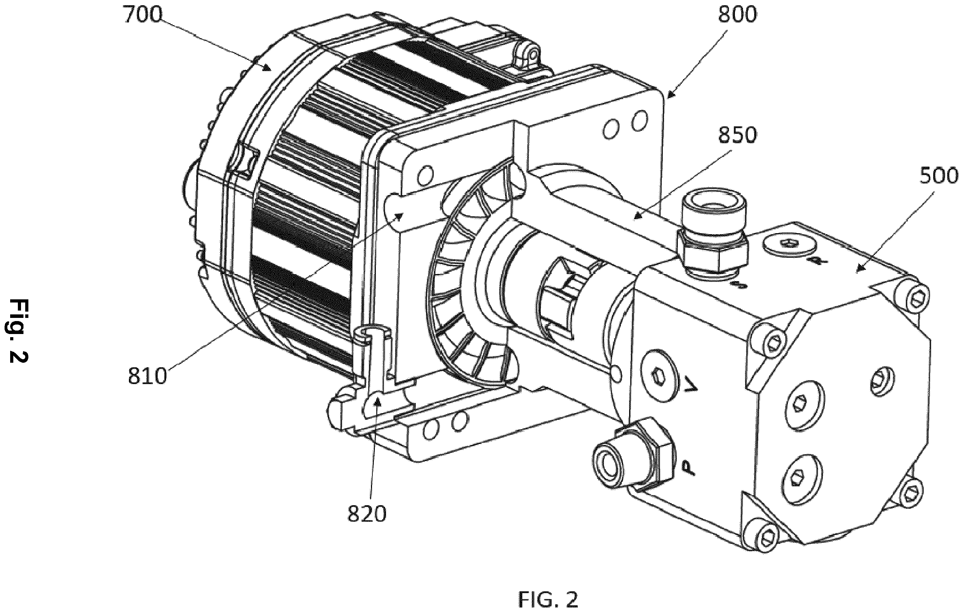

FIG 2 illustrates a 3D drawing of a motor and fan arrangement.

In the FIG. 2 a fan arrangement 800, is in a fan housing, the fan arrangement 800 comprises a fan wheel, but might also be an impeller and/or a propeller, and/or a is provided by fan segments cut in the motor.

Furthermore, is illustrated in FIG. 2 an oil pump unit 500 for generating an oil flow and a motor 700 of the oil pump 500, such as a motor axel and/or a motor shaft, and a a clutch housing 850.

The illustrated configuration is suitable for providing an air stream (not shown). Within the invention, it is preferred that the air stream is provided by one or more integrated air sources, such as by the motor 700.

Furthermore in FIG. 2 is a fan arrangement 800 illustrated, said fan arrangement comprising:
- a fan inlet 810, and
- a fan outlet 820,
wherein the fan arrangement 800 is arranged in relation to and/or on the motor 700 of the oil pump 500.

In FIG. 2 the fan arrangement is directly mounted on and driven by the motor shaft.

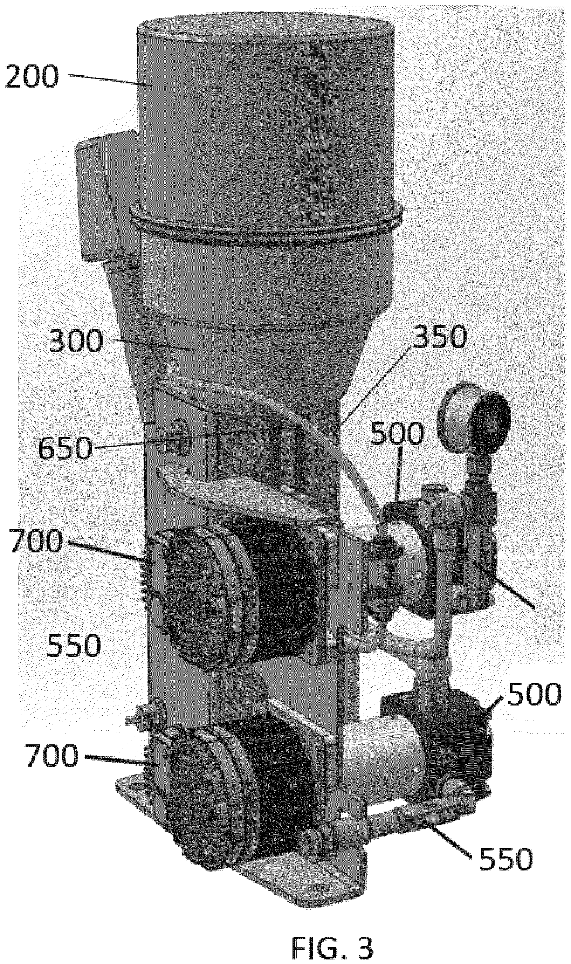

FIG 3 illustrates a reclamation unit with two motors and a ventilation system.

FIG. 3a-b illustrate that a fan outlet 820 is in fluid communication with the air inlet 610. In the figure the communication is provided through tubes, wherein the tubes provide an air stream 900 between the fan arrangement 800 and the air inlet 610 is provided, when in use, preferably an air stream 900 is conducted through at least one tube 650 from the fan outlet 820 to the air inlet 610.

In FIG. 3 the oil reclamation unit 100 illustrated is supplemented with one or more active air fan arrangements 800, mounted on the shaft of the existing motor 700 to ventilate the evaporation chamber 300. This multiplies the evaporation effect without any need for further energy supply. The solution may be suitable in many systems and units for filtering particles and water using the evaporation chamber principle.

The oil reclamation unit 100 can be equipped with an accumulator tank 350, where there is no direct return to oil reservoir by gravity. This along with the air flow through the evaporation chamber 300 is used for maintaining the evaporator chamber ventilated to the atmosphere. Where a tank 350 is fitted, an oil return pump delivers oil back to the system.

The need for space is designed to be as optimal as possible in order to have easy installation. The unit can be installed mechanically by holes in the bottom plate. To reduce impact from vibrations a supporting ear is located at the top.

The accumulator tank 350 can be of various size depending on filter capacity, but in general has sufficient excess volume for holding the oil totally drained from filter on the unit.

The unit has focus on serviceability. Preferably all parts as pumps, motors, sensors, valves, heating coil etc. can be replaced more or less without the need for removing other parts than the part in question.

The construction and parts vary depending on size of the unit, application and available supply.

The chassis is a one piece welded stainless steel construction.

The unit is supplied with one, two or more motors 700 depending on application and size. The motors are chosen with optimized torque and current performance to match necessary size of pump with focus on oil at low tem peratures.

Where a tank 350 is delivered as part of the unit as illustrated, this naturally ensures ventilation by breathing through the air outlet 620. To enhance the water evaporation, the oil reclamation unit 100 provides ventilation by blowing a fractional amount of ambient air through the air inlet 610, which in the FIG. 3 is located at the top of the tank.

It should be understood, that in units without a tank 350, the air can be blown directly into the evaporation chamber 300.

Where necessary, pumps 500 can be provided with check-valves 550 in the outlets of the pumps. This prevents system oil from entering the filter when the filter unit is stopped.

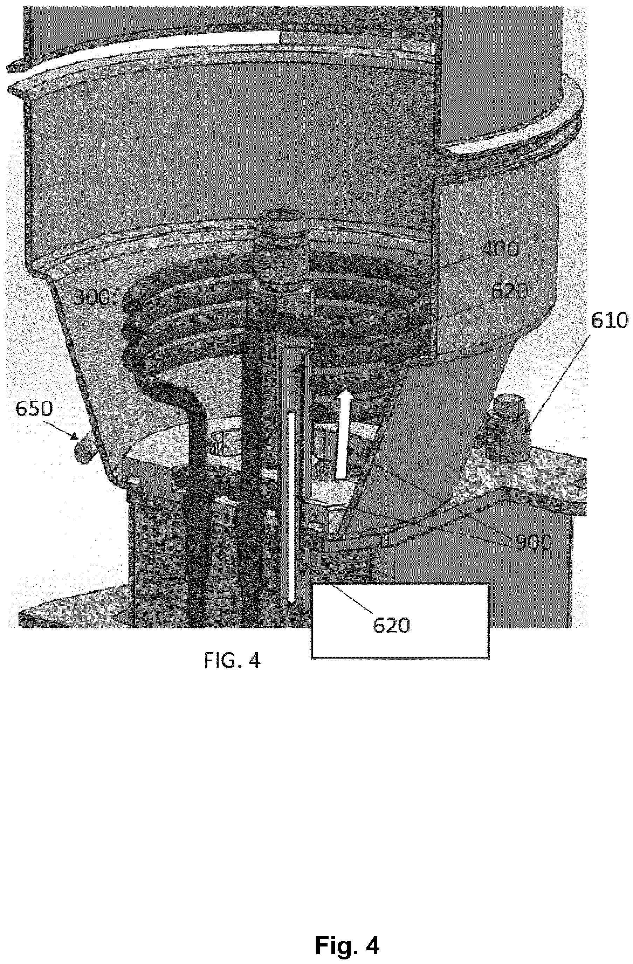

FIG 4 illustrates a cross-section into an evaporation chamber 300, wherein the ventilation system is clearly illustrated, such that the system comprises at least:
- an air inlet 610, and
- an air outlet 620,

Furthermore is a coil as the heating unit 400 in the evaporation chamber illustrated.

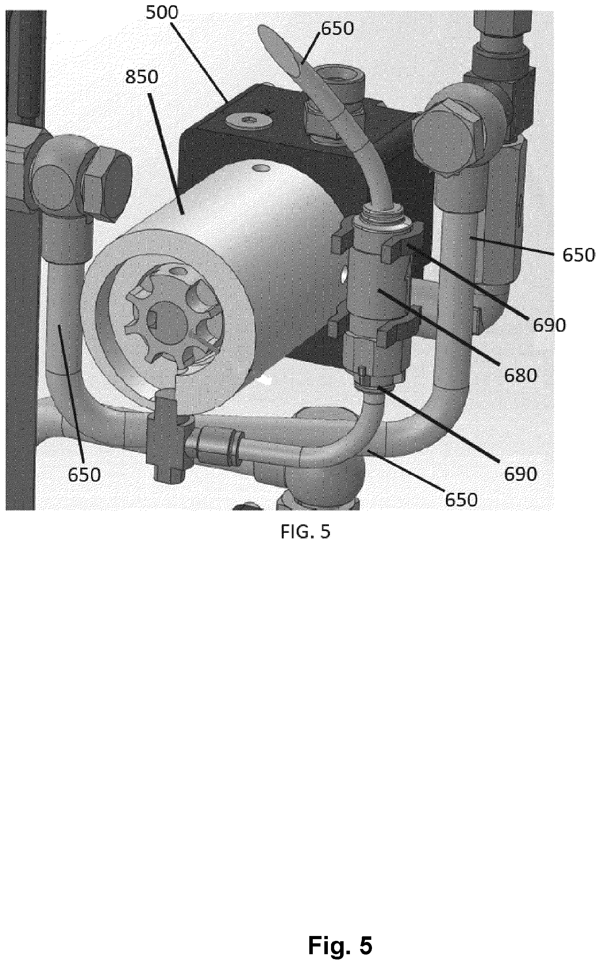

FIG 5 illustrates an embodiment of a ventilation filter 680.

Within the invention the air can be supplied by an integrated centrifugal pump 500 located in a clutch housing 850, and can be, where a return pump is mounted, set in series. The clutch housing has an air intake and outlet.

The air fan housing 800 might be an integrated part of the clutch housing. The air is preferably filtered in a ventilation filter 680, preferably as illustrated a replaceable in-line filter. The filter is preferably mounted by one or more brackets 685, which also facilitate removal of the air filter housing.

Preferably, the connections are "one-touch-fittings" 690 easily assembled and disassembled. The ventilation filter 680 is mounted at the tube 650 or in relation to the tube conducting an air stream.

Furthermore, FIG. 5 is illustrating the fan arrangement 800 and/or fan housing being an integrated part of a clutch housing 850.

## Claims

1. An oil reclamation unit (100), said reclamation unit comprising:
- a housing (200), said housing comprising:
- a filter unit (250),
- an evaporator chamber (300),
- a heating source (400), such as a heating unit,
- an oil pump unit (500) for generating an oil flow,
- a ventilation system (600), said ventilation system comprising at least:
- an air inlet (610), and
- an air outlet (620).

2. The oil reclamation unit (100) according to claim 1, wherein the ventilation system (600) is arranged to provide ventilation of the evaporator chamber (300), when in use.

3. The oil reclamation unit (100) according to any of the preceding claims, wherein the air outlet (620) is a steam outlet for exhausting steam, when in use.

4. The oil reclamation unit (100) according to any of the preceding claims, wherein the system further comprises:
- a motor (700) of the oil pump (500), such as a motor axel and/or a motor shaft, and/or
- a fan arrangement (800), preferably in a fan housing.

5. The oil reclamation unit (100) according to claim 4, wherein the fan arrangement (800) comprising:
- a fan inlet (810), and
- a fan outlet (820).

6. The oil reclamation unit (100) according to claim 4, wherein the fan arrangement (800) comprises an impeller and/or a propeller, and/or a fan wheel and/or is provided by fan segments cut in the motor.

7. The oil reclamation unit (100) according to any of the preceding claims, wherein the ventilation system (600) is driven at least partly, preferably fully, by the action of the motor (700).

8. The oil reclamation unit (100) according to claim 4, wherein the fan arrangement (800) and/or fan housing is an integrated part of a clutch housing (850).

9. The oil reclamation unit (100) according to claim 4, wherein the fan arrangement (800) is arranged in relation to and/or on the motor (700) of the oil pump (500).

10. The oil reclamation unit (1) according to claim 4, wherein said fan outlet (820) is in fluid communication with the air inlet (610).

11. The oil reclamation unit (100) according to claim 4, wherein an air stream (900) between the fan arrangement (800) and the air inlet (610) is provided, when in use, preferably an air stream (900) is conducted through at least one tube (650) from the fan outlet (820) to the air inlet (610).

12. The oil reclamation unit (100) according to any of the preceding claims, wherein an air stream (900) is provided by one or more integrated air sources, such as by the motor (700).

13. The oil reclamation unit (100) according to any of the preceding claims, wherein the unit comprises:
- a ventilation filter (680), preferably an in-line filter.

14. The oil reclamation unit (100) according to any of the preceding claims, wherein the ventilation filter (680) is in connection with the tube (650) or in relation to the tube conducting an air stream (900).

15. A method for ventilation of an oil reclamation unit, preferably an oil reclamation unit (100) according to any of the preceding claims, wherein said method comprises the steps of:
- providing an oil reclamation unit (100),
- starting the oil reclamation unit (100) by starting an oil pump (500),
- providing a ventilating system of the oil reclamation unit (100), for ventilating the unit, preferably an integrated ventilation system, said ventilation system comprising at least:
- an air inlet (610), and
- an air outlet (620),
- sucking in air, preferably by a fan air inlet (810) of a fan arrangement (800),
- providing an air stream (900), preferably at least partly through a tube (650) and/or through a filter (680),
- ventilating the oil reclamation unit (100), preferably ventilating an evaporator chamber (300) of the unit, by the air outlet (620),
wherein the ventilation system (600) is driven at least partly, preferably fully, by the action of the motor (700),
wherein the steps of the method can be executed in any order and/or executed simultaneously.
